# EUROPEAN PATENT APPLICATION

(11) **EP 3 156 916 A1**
(43) Date of publication of application: **19.04.2017**
(21) Application number: 15806421.2
(22) Date of filing: 19.03.2015
(51) Int. Cl.: G06F 17/30, G06F 13/00

(54) **INFORMATION-PROCESSING DEVICE, CONTROL METHOD, AND PROGRAM**

(30) Priority: 11.06.2014 JP 2014120486
(71) Applicant: Sony Corporation, Tokyo 108-0075 (JP)
(72) Inventor: TSUBOI, Naoto, Tokyo 108-0075 (JP)
(74) Representative: MFG Patentanwälte Meyer-Wildhagen Meggle-Freund Gerhard PartG mbB
(86) International application number: PCT/JP2015/058343
(87) International publication number: WO 2015/190149

(57) **Abstract**

[Object] To provide an information processing device, a control method, and a program that can present a search axis indicating the policy of a POI information search to a user.

[Solution] An information processing device including: a search unit configured to search for POI information to be recommended to a user; an extraction unit configured to extract one or more search axes for searching for the POI information to be recommended to the user, in accordance with current position information of the user; and a presentation control unit configured to perform control in a manner that the extracted search axis is presented to the user along with the POI information that has been searched for.

## Description

### Technical Field

The present disclosure relates to an information processing device, a control method, and a program.

### Background Art

A variety of recommendation systems have been conventionally proposed each of which recommends content on demand from users. For example, Patent Literature 1 provides an information processing device that acquires the metadata of the content which satisfies a search condition specified by a user in query processing for metadata as a metadata search result along with information indicating whether or not the content has already been purchased by the user. This eliminates the need for a server to separately perform query processing for searching for content and query processing for referring to a content purchase history, and can reduce the workload of the query processing on the server.

In addition, a point of interest (POI) information recommendation system is also known which presents, to a user, POI information on restaurants, sightseeing resorts, institutions, and the like associated with the position information. Such POI information is displayed on the map showing the region around the current position in the form of icons or other pictorial symbols along with a route to the destination, the mark of the current position, and the like, for example, on the basis of the position information acquired from the GPS or the like in the navigation system. Alternatively, a POI information list can be displayed and selected on the screen.

### Citation List

### Patent Literature

Patent Literature 1: JP 2010-28584A

### Summary of Invention

### Technical Problem

The conventional system that recommends POI information does not present context information to a user in spite of the various context (search axes) of POI information searches, but merely presents specific POI information on the map or the list as a recommendation result.

Information that a user desires does not necessarily rank high on the list because information on POIs indicating a specific restaurant and the like around the current location of the user is uniformly presented. Accordingly, there are the problems that the preferences of the user are not taken into consideration, and the presentation of the same result for consecutive days bores the user. Furthermore, POI information is going to increase and to be updated more frequently in the future. Accordingly, when a large number of lists are presented, a user has to scroll the screen or to flick pages so many times to search for desired information that much workload is imposed on the user.

The present disclosure then proposes an information processing device, a control method, and a program that can present a search axis indicating the policy of a POI information search to a user.

### Solution to Problem

According to the present disclosure, there is proposed an information processing device including: a search unit configured to search for POI information to be recommended to a user; an extraction unit configured to extract one or more search axes for searching for the POI information to be recommended to the user, in accordance with current position information of the user; and a presentation control unit configured to perform control in a manner that the extracted search axis is presented to the user along with the POI information that has been searched for.

According to the present disclosure, there is proposed a control method including: searching for POI information to be recommended to a user; extracting one or more search axes for searching for the POI information to be recommended to the user, in accordance with current position information of the user; and performing control in a manner that the extracted search axis is presented to the user along with the POI information that has been searched for.

According to the present disclosure, there is proposed a program for causing a computer to function as: a search unit configured to search for POI information to be recommended to a user; an extraction unit configured to extract one or more search axes for searching for the POI information to be recommended to the user, in accordance with current position information of the user; and a presentation control unit configured to perform control in a manner that the extracted search axis is presented to the user along with the POI information that has been searched for.

### Advantageous Effects of Invention

According to the present disclosure as described above, it is possible to present a search axis indicating the policy of a POI information search to a user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram for describing an overview of a recommendation system according to an embodiment of the present disclosure.
[FIG. 2] FIG. 2 is a block diagram illustrating an example of a configuration of a server according to the present embodiment.
[FIG. 3] FIG. 3 is a block diagram illustrating an example of a configuration of a client according to the present embodiment.
[FIG. 4] FIG. 4 is a sequence diagram illustrating operation processing of the recommendation system according to the present embodiment.
[FIG. 5] FIG. 5 is a diagram illustrating an example of a UI according to the present embodiment which presents POI information and a search context label.
[FIG. 6] FIG. 6 is a diagram illustrating a UI example displayed when a display screen illustrated in FIG. 5 is scrolled.
[FIG. 7] FIG. 7 is a diagram illustrating an example of a screen transition made by selection of a search context label.
[FIG. 8] FIG. 8 is a diagram illustrating a UI example in which a plurality of search context labels can be selected.
[FIG. 9] FIG. 9 is a diagram illustrating another UI example in which a plurality of search context labels can be selected.
[FIG. 10] FIG. 10 is a diagram illustrating a UI example in which the sizes of search context labels are different in accordance with priority of the search context labels.
[FIG. 11] FIG. 11 is a diagram illustrating a UI example in which darkness levels of colors of search context labels are different in accordance with recommendation levels of the search context labels from another point of view.
[FIG. 12] FIG. 12 is a diagram illustrating a UI example in which search context labels are displayed at display intervals according to a distance from a current location.
[FIG. 13] FIG. 13 is a diagram illustrating an example of a UI that additionally displays a POI information history.
[FIG. 14] FIG. 14 is a diagram illustrating another UI example of a past history.
[FIG. 15] FIG. 15 is a diagram illustrating a UI example in which a display area is narrow.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

The description will be made in the following order.
1. Overview of recommendation system according to embodiment of present disclosure
2. Basic configuration
2-1. Configuration of server
2-2. Configuration of client
3. Operation processing
4. UI examples
4-1. Basic UI example in which POI information and search context label are presented
4-2. UI example in which search context labels can be selected
4-3. Display mode example of search context label
4-4. UI example in which past history is presented
4-5. UI example according to different devices
5. Others
6. Conclusion

### <<1. Overview of recommendation system according to embodiment of present disclosure>>

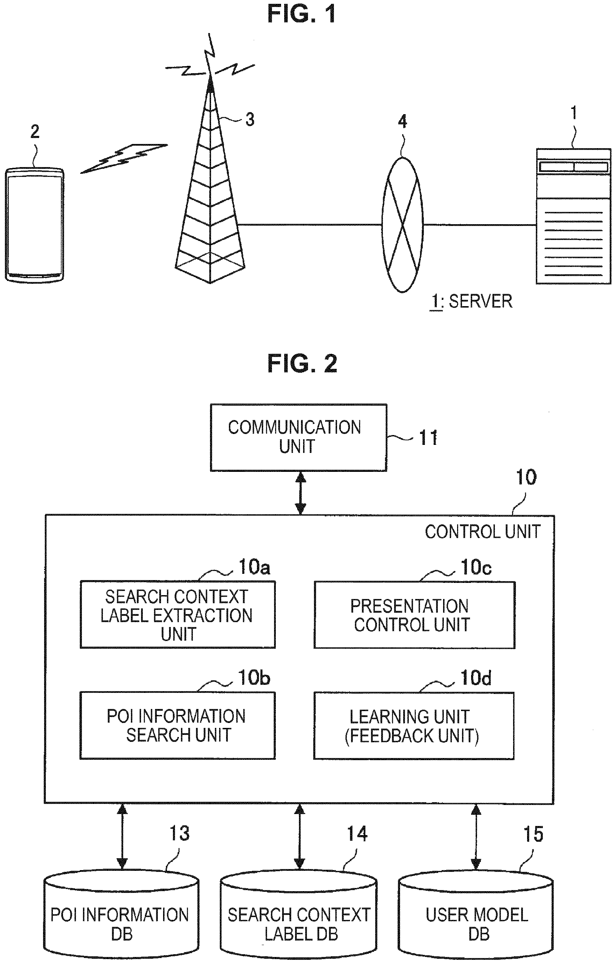

First of all, the overview of a recommendation system according to an embodiment of the present disclosure will be illustrated and described in FIG. 1. As illustrated in FIG. 1, the recommendation system according to the present embodiment includes a client 2 that presents POI information to a user, and a server 1 that extracts a search context label (search axis) which is an item indicating a search for POI information and the policy of the POI information search. The client 2 wirelessly communicates with a base station 3, and transmits and receives data to and from the server 1 that is connected to a network 4.

The server 1 searches for point of interest (POI) information indicating information on a restaurant, a sightseeing resort, an institution, or the like around the current location of a user on the basis of the current position information of the user which is acquired by the client 2, and presents the POI information from the client 2 to the user.

The conventional POI information recommendation system uniquely presents only POI information on a restaurant or the like around the current location of a user. Accordingly, there is no change in information recommended in a daily scene, which bores a user. For example, if a user checks a POI information recommendation result to search for a lunch restaurant around the office, the same result is presented for consecutive days.

Compared with content recommendation, POI information includes a variety of genres belonging to different categories, and it is then difficult to treat and recommend them in the same way. For example, the recommendation information indicating "those who visit this museum also visit this ramen restaurant" is presented simply because the ramen restaurant is located close to the museum, but this does not match the preferences of a user.

In contrast, it is possible to reflect the user preferences on the POI information recommendation system by presenting, at a high position, POI information which belongs to the same category as or similar category to that of the POI information selected by a user on the basis of feedback on the POI information selection by the user. However, the purpose of a search for POI information is not always clear, and sometimes changes considerably in the middle of the search. Accordingly, it is also problematic that the past selection continues to be reflected. For example, if a user would like to watch a movie and searches for a movie theater, POI information on the movie theater continues to be preferentially presented even after the user gives up watching the movie in the middle because of lack of time. The habitual selection of inexpensive restaurants leads to the continuous preferential presentation of POI information on inexpensive restaurants even if a user would exceptionally like to search for expensive restaurants.

In addition, a POI information list of recommendation results presents information on specific POIs, and thus offers so specific responses that a user feels the responses unnatural in some cases. For example, when a specific hamburger restaurant is recommended after some ramen restaurants, a user would feel it is more natural that hamburger restaurants are proposed to the user before the specific hamburger restaurant is recommended.

These problems arise probably because no context information is presented to a user in spite of the various context (search axes) of POI information searches chiefly in mobile environments, but specific POI information is merely presented on the map or the list as a recommendation result.

The present embodiment then also presents, to a user, search context labels indicating the policies of POI information searches along with specific POI information, and enables the user to select a search context label that matches the search purpose.

Once the user selects a search context label, POI information is re-searched for on the basis of the selection of the user and the search context label updated in accordance with the selection of the user is presented along with a re-search result. Repeating such an operation allows the user to select the search context label matching each search purpose and to enjoy the desired presented POI information as if the user interacted with the recommendation system.

The overview of the recommendation system according to an embodiment of the present disclosure has been described so far. Next, the basic configurations of the server 1 and the client 2 will be described which are included in the recommendation system according to the present embodiment.

### <<2. Basic configuration>>

### <2-1. Configuration of server>

FIG. 2 is a block diagram illustrating an example of the configuration of the server 1 according to the present embodiment. As illustrated in FIG. 2, the server 1 includes a control unit 10, a communication unit 11, a POI information database (DB) 13, a search context label DB 14, and a user model DB 15.

### (Control unit 10)

The control unit 10 includes a microcontroller equipped with, for example, a central processing unit (CPU), a read only memory (ROM), a random access memory (RAM), a non-volatile memory, and an interface unit, and controls each component of the server 1. For example, the control unit 10 stores the current position information of a user and the current time transmitted from the client 2 via the communication unit 11 in the user model DB 15. The control unit 10 may also store the behavior pattern of a user in the user model DB 15. The behavior pattern is generated on the basis of the current position information of the user and the time (behavior log).

As illustrated in FIG. 2, the control unit 10 also functions as a search context label extraction unit 10a, a POI information search unit 10b, a presentation control unit 10c, and a learning unit 10d.

### - Search context label extraction unit

The search context label extraction unit 10a extracts a search context label to be presented to a user from the search context label DB 14. The search context label is an item (search axis) indicating the search policy of POI information in the present specification. The following shows examples of the search context label.
(a) Search context labels that indicate POI information recommendation algorithms and parameters thereof (recommendation algorithm search) ··· "favorite restaurant" for searching for a restaurant that a user frequently visits, "previous restaurant" for searching for a restaurant searched for in the past, "restaurant similar to this restaurant" for searching for a restaurant similar to the currently recommended restaurant, "movie that will play right away" for searching for a movie theater according to the current time, "○○'s recommendation" for searching for a specific person's recommendation in cooperation with social information, "popular in SNS in these days" and "○○ wrote in SNS" for searching for what is talked about much in social information and the like, "tagged restaurant" and "bookmarked place" for searching for what a user has, for example, tagged/bookmarked, and the like
(b) Search context labels that correspond to POI information recommendation reasons (recommendation reason search) ··· "sweet tooth" for searching for a restaurant recommended to those who like something sweet, "curry fan" for searching for a restaurant recommended to those who like curry, "extra ticket for low price" for searching for information recommended to those who desire bargain tickets, and the like
(c) Attribute information (field search) on POI information which serves as a filter for searches for POI information irrespective of granularity ··· "tonkotsu ramen," "ramen," "noodles," "Chinese food," "restaurant," or the like
(d) Metadata associated with places (area search) ··· "○○ station" for searching for information on a POI around a specific station, "○○ town" for searching for information on a POI in a specific town, and the like
(e) Budget range (price search) ··· "inexpensive restaurant" for searching for restaurants whose budget range is set lower than a predetermined price (which may be customized for each user), "expensive restaurant" for searching for restaurants whose budget range is set higher than a predetermined price, and the like

The five types of search context labels have been described so far. They are, however, examples. The search context labels according to the present embodiment are not limited to the above-described examples.

These search context labels are extracted, for example, in accordance with at least any of the current position of a user which is stored in the user model DB 15, a context feature amount based on the last feedback, user preferences based on a feedback history, and a user behavior pattern based on a behavior log. The following specifically describes the extraction of each search context label.

### - Extraction of search context label according to current position -

A search context label can be extracted in accordance with the current position of a user when the client 2 first transmits a POI search request along with the current position information. The search context label extraction unit 10a preferentially extracts a search context label for searching for POI information associated with the region around the current location of a user. The number of search context labels to be extracted is not limited in particular. A predetermined number of search context labels at the top may be extracted. In this way, the search context label extraction unit 10a can narrow down search context labels to be extracted in accordance with places.

### - Extraction of search context label according to context feature amount -

In addition, when acquiring an operation of a user to select POI information or search context labels from the client 2 as feedback information, the search context label extraction unit 10a calculates the feature amount score of each search context label on the basis of the last feedback information. As context feature amount scores more match the current search purpose of the user (as context feature amount scores are more highly correlated with the current search purpose of the user), higher scores are calculated. Specific calculation methods are not limited in particular in the present specification. The search context label extraction unit 10a can then extract a search context label that more matches the current search purpose of the user by extracting search context labels preferentially from the search context label having the highest calculated context feature amount score.

For example, when the search context label is selected indicating B station that is a station away by train from A station which a user is currently in, it is estimated that the user desires POI information on not the region around A station (current location), but the region around B station. The feature amount score of the search context label is calculated in a manner that the score increases with decrease in the distance to B station, and the search context label having the higher feature amount score is extracted.

Such a context feature amount score is calculated each time a user yields feedback. This makes it possible to be free from the search context labels (policies of the search purposes) selected in the past, and to flexibly address the changing search purposes of the user. Narrowing down search context labels by place to some extent, and then calculating the context feature amount scores can reduce calculation workload.

### - Extraction of search context label according to user preferences -

The search context label extraction unit 10a can also refer to user preferences estimated from the feedback history of the user stored in the user model DB 15 to extract a search context label that matches the user preferences (that is highly correlated with the user preferences). More specifically, the search context label extraction unit 10a narrows down search context labels by place to some extent, weighs the search context labels on the basis of user preferences, and then extracts search context labels preferentially from the search context label that most matches the user preferences. The user preferences may be calculated for each place or time. For example, when a user is in A station on a weekday, the user prefers to inexpensive restaurants. The search context label extraction unit 10a thus extracts a search context label for searching for inexpensive restaurants. Meanwhile, when a user is in a place other than A station on a holiday, the user prefers to expensive restaurants that serve a full-course dinner with a night view. The search context label extraction unit 10a thus extracts respective search context labels for searching for restaurants with a night view, restaurants that serves a full-course dinner, and expensive restaurants.

### - Extraction of search context label according to user behavior pattern -

The search context label extraction unit 10a can also refer to the user behavior pattern based on the behavior log of a user which is stored in the user model DB 15 to extract search context labels preferentially from the search context label that matches (that is most highly correlated with) the user behavior pattern. For example, when there is the possibility that a user moves to B station or C station on the basis of the behavior pattern of the user though the user is currently in A station, the search context label extraction unit 10a also extracts search context labels for searching for POI information on the regions around B station and C station in addition to POI information on the region around A station.

### - Application examples of search context label extraction -

The extraction methods of search context labels have been specifically described so far. Additionally, the recommendation system according to the present embodiment may combine at least one or more of the above-described extraction methods to extract a search context label. At that time, the search context label extraction unit 10a calculates the correlation (position feature amount indicating the closeness of distance) with a predetermined place, the correlation (context feature amount) with user context (search purpose) based on the last feedback, the correlation (preference feature amount) with user preferences, and the correlation (behavior pattern feature amount) with a user behavior pattern for each search context label, and extracts a search context label in accordance with the score multiplied by them as weights.

The search context label extraction unit 10a may further extract a search context label for searching for restaurants, institutions, or the like that are currently open, in accordance with the current time.

The search context label extraction unit 10a (preferentially) extracts a plurality of search context labels in descending order by the predetermined score (each feature amount) irrespective of the granularity of searches. Specifically, for example, the search context label extraction unit 10a may extract a "ramen" search context label for searching for ramen in general, and a "tonkotsu ramen" search context label for searching for tonkotsu ramen, which is a dish included in the ramen menu.

When search context labels are extracted in the above-described extraction method, it is possible to additionally extract another search context label having a high correlation score indicating high correlation with the extracted search context labels. The correlation score is calculated in a manner that the correlation score is higher as search context labels are more highly correlated with each other. The correlation score is assigned to two or more search context labels stored in the search context label DB 14 in advance. Specifically, the correlation score is calculated, for example, on the basis of the similarity level between labels, or the selective correlation calculated on the basis of the feedback histories of a plurality of users. Specific calculation methods of correlation scores are not limited in particular in the present specification. This makes it possible to additionally extract a search context label which is frequently selected by a user who selects a search context label when the search context label is extracted, for example, in accordance with a context feature amount. The correlation scores may be customized in accordance with places or users.

### - POI information search unit

The POI information search unit 10b searches for POI information to be presented to a user from the POI information DB 13. POI information is searched for, for example, in accordance with at least any of the current position of a user which is stored in the user model DB 15, a selected search context label, the POI feature amount based on the last feedback, and the user preferences based on a feedback history. The following specifically describes each search for POI information.

### - Search for POI information according to current position -

POI information can be searched for in accordance with the current position of a user when the client 2 first transmits a POI search request along with the current position information. The POI information search unit 10b searches POI information associated with the region around the current location of a user preferentially from the POI information associated with the closest region to the current position of the user. The number of pieces of POI information to be searched for is not limited in particular. A predetermined number of pieces of POI information at the top may be output as search results. In this way, the POI information search unit 10b can narrow down POI information to be searched for in accordance with places.

### - Search for POI information according to selected search context label -

In addition, when acquiring an operation of a user to select search context labels from the client 2 as feedback information, the POI information search unit 10b searches for POI information on the basis of the search policy indicated by the selected search context label.

### - Search for POI information according to POI feature amount -

In addition, the POI information search unit 10b calculates the feature amount score of each piece of POI information on the basis of the last feedback information (selection operation of POI information and a search context label) transmitted from the client 2. As the feature amount scores of POI information more match the current search purpose of the user, higher scores are calculated. Specific calculation methods are not limited in particular in the present specification. The POI information search unit 10b can then search for POI information that matches the current search purpose of a user by searching for pieces of POI information preferentially from the POI information that has the highest calculated POI information feature amount score.

In addition, the POI information search unit 10b may calculate a POI information feature amount on the basis of the context feature amount of a search context label. Specifically, for example, the POI information search unit 10b may weigh the feature amount of POI information for which the search context label searches, in accordance with the context feature amount.

### - Search for POI information according to user preferences -

In addition, the POI information search unit 10b can refer to user preferences estimated from the feedback history of the user stored in the user model DB 15 to search for POI information that matches the user preferences.

### - Application examples of POI information search -

The search methods of POI information have been specifically described so far. Additionally, the recommendation system according to the present embodiment may combine at least one or more of the above-described search methods to extract POI information.

### - Presentation control unit

The presentation control unit 10c performs control in a manner that one or more search context labels extracted by the search context label extraction unit 10a and one or more pieces of POI information searched for by the POI information search unit 10b are presented from the client 2 to a user. Specifically, the presentation control unit 10c performs control in a manner that a control signal requesting the presentation of a search context label and POI information is transmitted from the communication unit 11 to the client 2. At this time, the presentation control unit 10c performs control in a manner that a search context label and POI information (which have, for example, higher feature amount scores) preferentially extracted and searched for by the search context label extraction unit 10a and the POI information search unit 10b, respectively, are preferentially presented (at high positions/at the head).

### - Learning unit

The learning unit 10d functions as a feedback unit that stores feedback information such as a selection history of POI information and a selection history of a search context label which are transmitted from the client 2 in the user model DB 15. In addition, the learning unit 10d may calculate user preferences on the basis of the history of feedback information, and store the calculated user preferences in the user model DB 15.

### (Communication unit 11)

The communication unit 11 has a function of establishing a wireless/wired connection to an external device, and transmitting and receiving data to and from the external device. The communication unit 11 according to the present embodiment, for example, connects to the client 2, receives current position information and feedback information, and transmits a control signal that requests the presentation of POI information and a search context label in accordance with the control of the presentation control unit 10c.

### <2-2. Configuration of client>

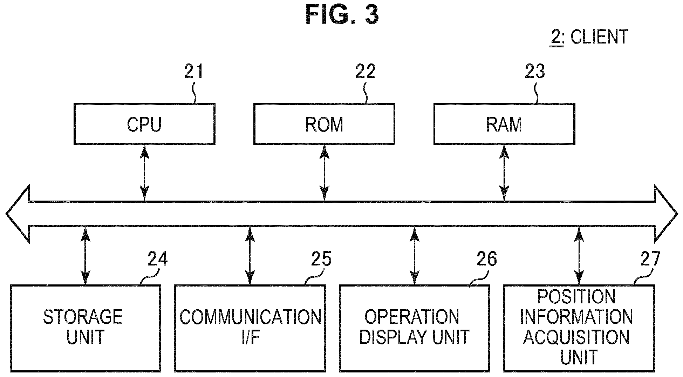

FIG. 3 is a block diagram illustrating an example of the configuration of the client 2 according to the present embodiment. The client 2 may be a smartphone terminal as illustrated in FIG. 1, or may also be a tablet terminal, a mobile phone terminal, a personal digital assistant (PDA), a personal computer (PC), a portable music player, a portable game console, or a wearable terminal (such as a head-mounted display (HMD), an eyeglasses-type HMD, a watch terminal, and a band terminal).

As illustrated in FIG. 3, the client 2 includes a CPU 21, a ROM 22, a RAM 23, a storage unit 24, a communication interface (I/F) 25, an operation display unit 26, and a position information acquisition unit 27. In addition, the client 2 uses, for example, a bus serving as a transmission path of data to connect the components with each other.

The CPU 21 includes, for example, a microcontroller, and controls each component of the client 2. For example, the CPU 21 functions as a display control unit that performs control in a manner that POI information and one or more search context labels are displayed on the operation display unit 26 discussed below in accordance with a control signal transmitted from the server 1 via the communication I/F 25. At this time, the CPU 21 (display control unit) displays the one or more search context labels in descending order by the predetermined score. That is, the CPU 21 (display control unit) displays search context labels in the order in which the search context label extraction unit 10a in the server 1 preferentially extracts search context labels in accordance with the predetermined score. As discussed above, examples of the predetermined score include a position feature amount score indicating the closeness to the current location of a user, a context feature amount score indicating the correlation with the user context (search purpose) based on the last feedback, a preference feature amount score indicating the correlation with user preferences, and a behavior pattern feature amount score indicating the correlation with a user behavior pattern. At least any one or more of these scores may be combined, and the respective scores are multiplied as weights to calculate the predetermined score.

The ROM 22 stores data for control such as programs and operation parameters used by the CPU 21. The RAM 23 temporarily stores, for example, a program or the like executed by the CPU 21.

The storage unit 24 stores various kinds of data. For example, the storage unit 24 can also store temporarily POI information and a search context label transmitted from the server 1 via the communication I/F 25.

The communication I/F 25 is a communication means of the client 2. The communication I/F 25 communicates with an external device included in the recommendation system according to the present embodiment via the network 4 (or directly). For example, the communication I/F 25 wirelessly connects to the base station 3, and transmits current position information to the server 1 on the network 4 via the base station 3.

The operation display unit 26 has an operation input function and a display function. The operation input function is specifically implemented by a touch sensor that receives an operation input on the display screen. The display function is implemented, for example, by a liquid crystal display (LCD) or an organic light-emitting diode (OLED). The display screen displays POI information and a search context label in accordance with the control of the CPU 21. Display screen examples (UI examples) of POI information and a search context label will be specifically described in "4. UI examples" discussed below.

The position information acquisition unit 27 has a function of detecting the current position of the client 2 on the basis of an externally acquired signal. Specifically, for example, the position information acquisition unit 27 is implemented as a global positioning system (GPS) measurement unit, receives radio waves from a GPS satellite, detects the positon of the client 2, and outputs the detected position information to the CPU 21. In addition, the position information acquisition unit 27 may detect the position, for example, through Wi-Fi (registered trademark), transmission and reception to and from a mobile phone/PHS/smartphone, near field communication, or the like in addition to the GPS.

The respective configurations of the server 1 and the client 2 included in the recommendation system according to the present embodiment have been specifically described so far. The above-described components of the server 1 and the client 2 are examples. The present disclosure is not limited thereto. For example, some or all of the components of the server 1 may be provided in the client 2.

### <<3. Operation Processing>>

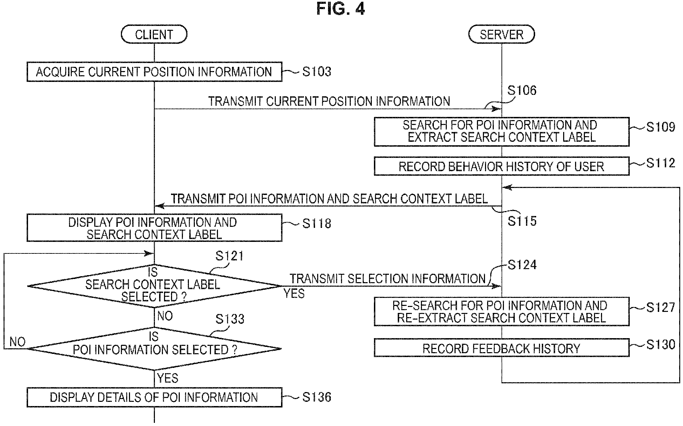

Next, the operation processing of the recommendation system according to the present embodiment will be described with reference to FIG. 4.

FIG. 4 is a sequence diagram illustrating operation processing of the recommendation system according to the present embodiment. As illustrated in FIG. 4, once the POI information recommendation system according to the present embodiment is first started, the client 2 acquires the current position information through the position information acquisition unit 27 in step S103.

Next, in step S106, the client 2 transmits the current position information to the server 1 and makes a recommendation request of POI information.

In step S109, the server 1 searches for one or more pieces of POI information on the region around the current location through the POI information search unit 10b, and extracts one or more search context labels through the search context label extraction unit 10a on the basis of the current position information. At this time, the server 1 may narrow down places on the basis of the current position information, and then search for POI information and extract search context labels on the basis of user preferences and a user behavior pattern.

In step S112, the control unit 10 of the server 1 stores the current position information transmitted from the client 2 in the user model DB 15 as a behavior history.

In step S115, the presentation control unit 10c of the server 1 transmits the POI information and the search context labels to the client 2, and issues an instruction to present the POI information and the search context labels to a user.

Next, in step S118, the CPU 21 of the client 2 displays the POI information and the search context labels on the operation display unit 26 and presents the POI information and the search context labels to the user in accordance with the instruction from the server 1. If the user would like to check the detailed information on the presented POI information, the user selects the POI information. If the presented POI information does not match the search purpose so that the user would like to check other POI information, the user can select a search context label that is similar to the search purpose of the user and issue an instruction for a re-search.

Specifically, if the search context labels are selected (S121/Yes), the client 2 transmits selection information (feedback information) indicating the selected one or more search context labels to the server 1 in step S124.

In step S127, the server 1 re-searches for POI information through the POI information search unit 10b, and re-extracts a search context label through the search context label extraction unit 10a on the basis of selected search context labels.

Next, in step S130, the learning unit 10d records, in the user model DB 15 as a feedback history, selection information indicating which search context label the user selects.

Returning to step S115, the server 1 transmits the POI information which is re-searched for, and the re-extracted search context label to the client 2.

In this way, repeating the processing in steps S115 to S130 allows a user to select a search context label that matches each search policy and to acquire the desired POI information.

If POI information in which the user is interested is presented, the user selects the POI information on the screen. If the POI information is selected (S133/Yes), the client 2 displays the details of the POI information in step S136. At this time, the client 2 may transmit selection information (feedback information) indicating the POI information selected by the user to the server 1. The learning unit 10d of the server 1 records the selection information transmitted from the client 2 in the user model DB 15 as a feedback history.

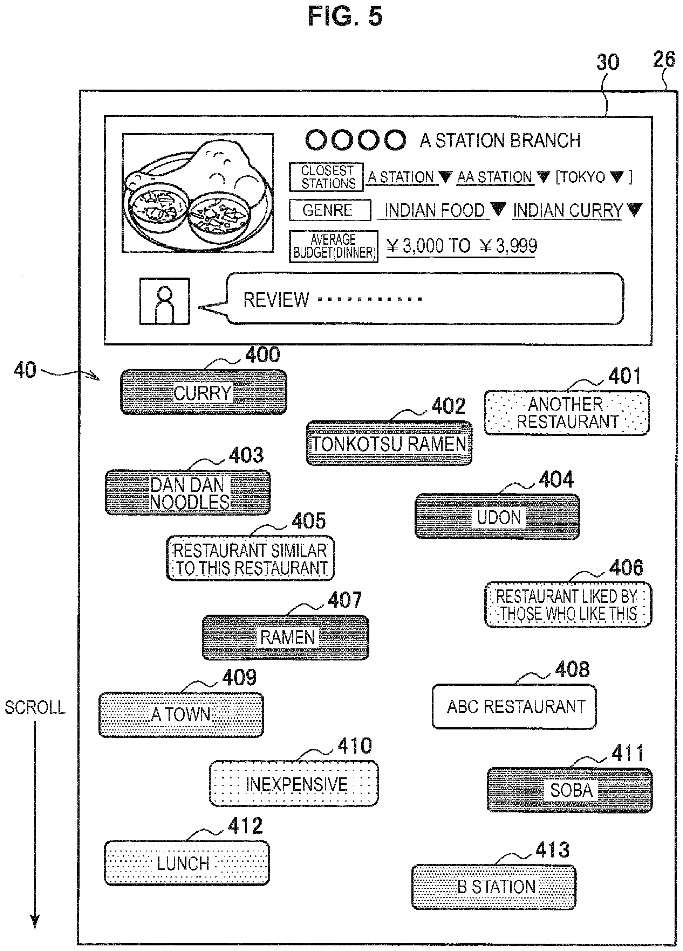

The operation processing of the recommendation system according to the present embodiment has been specifically described so far. Next, specific user interface (UI) examples in which POI information and search context to be presented to a user are presented in the recommendation system according to the present embodiment will be described with reference to FIGS. 5 to 15.

### <<4. UI examples>>

### <4-1. Basic UI example in which POI information and search context label are presented>

First of all, a basic UI example in which POI information and a search context label are presented will be described with reference to FIGS. 5 to 7.

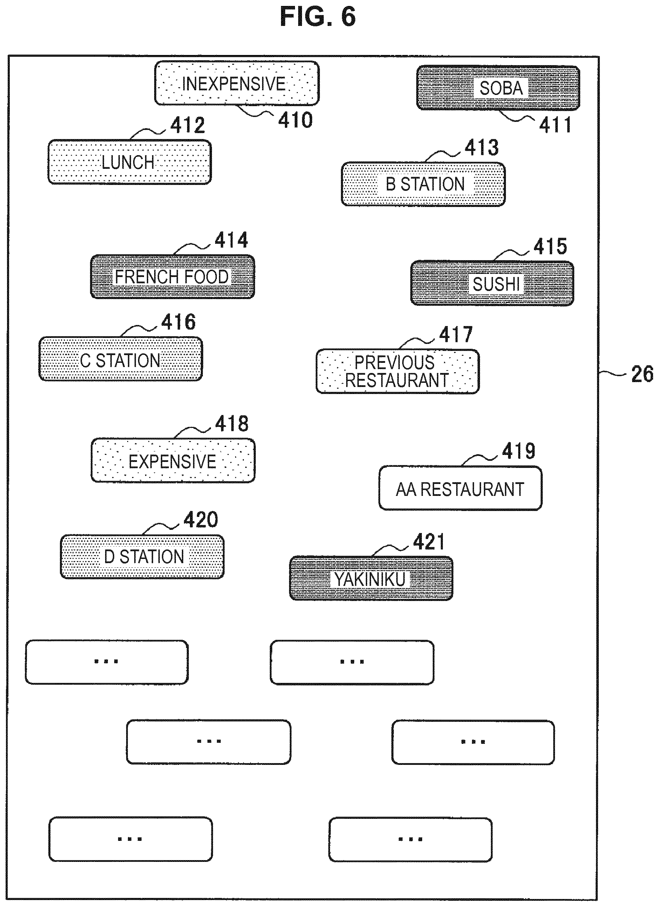

FIG. 5 is a diagram illustrating an example of a UI according to the present embodiment which presents POI information and a search context label. As illustrated in FIG. 5, for example, the operation display unit 26 of the client 2 displays POI information 30 along with restaurant information such as the restaurant name, the closest station, the genre, the average budget and the user review, and displays a plurality of search context labels 400 to 413 (search context label group 40) below the POI information 30. If the search context label group 40 does not fit in a single screen, search context labels 414 to 421 are displayed in accordance with a scroll operation of a user as illustrated in FIG. 6.

The search context label group 40 is displayed as buttons each including a keyword indicating a search policy, and may be arranged in lines or displayed untidily as illustrated in FIG. 5. The respective search context labels 400 to 421 may be displayed in different colors as illustrated in FIGS. 5 and 6 in accordance with the genres (categories) of the search context labels. For example, the search context labels 400, 402, 403, 404, 407, 411, 414, 415, and 421 are used for conducting searches in accordance with the specific classifications of food (field search), and thus displayed in the same color. Meanwhile, the search context labels 401, 405, 406, 410, 417, and 418 are used for conducting searches with specific information recommendation algorithms (recommendation algorithm search), and thus displayed in the same color. Furthermore, the search context labels 408, 409, 413, 416, 419, and 420 are used for conducting searches in a specific narrowed-down place (area search), and thus displayed in the same color.

The search context label group 40 may be displayed in the order in which the search context label extraction unit 10a preferentially extracts search context labels. For example, when extracting search context labels on the basis of the current position information of a user, the search context label extraction unit 10a more preferentially extracts search context labels for searching for information on POIs closer to the current position of the user or information on POIs that are found closer to the current position in large numbers.

For example, in the example illustrated in FIG. 5, when there are a large number of "curry restaurants" around the current location, the "curry" search context label 400 for searching for "curry restaurants" is displayed at the top. The granularities of search context labels to be displayed do not have to be unified. For example, the "ramen" search context label 407 for searching for "ramen restaurants" may be displayed at the same time as the "tonkotsu ramen" search context label 402 for searching for "tonkotsu ramen," which is a dish included in the ramen menu.

The user can move from the current location later, so that the "A town" search context label 409 for searching for restaurants in "A town," which is close to the current location, or the "B station" search context label 413 for searching for restaurants around "B station," which is a next station, may also be displayed. The movement of the user may be anticipated on the basis of the user behavior pattern.

The search context label indicating a specific POI around the current location may be displayed. For example, as illustrated in FIG. 5, the "ABC restaurant" search context label 408 is displayed for searching for "ABC restaurant (restaurant name)" around the current location.

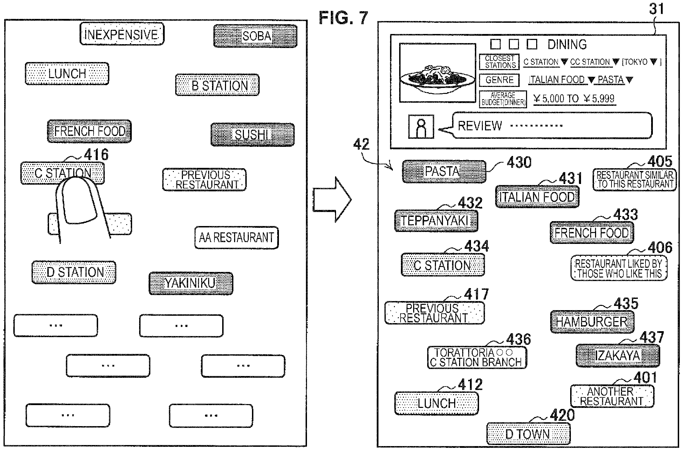

If the POI information 30 is desired information, a user selects the POI information 30 and views the detailed information. To the contrary, if the POI information 30 is not desired information, a user selects a search context label matching the search purpose of the user from the search context label group 40, and issues an instruction to re-search for POI information. This will be described with reference to FIG. 7.

FIG. 7 is a diagram illustrating an example of a screen transition made by the selection of a search context label. For example, once the "C station" search context label 416 matching the search purpose of searching for restaurants around C station is selected from the presented search context labels as illustrated in the left of FIG. 7, POI information 31 searched for again and the search context label group 42 extracted again in the server 1 on the basis of the "C station" search context label 416 are displayed as illustrated in the right of FIG. 7. That is, the search context label group 40 is displayed at first for searching POI information on the region around A station, which is the current location, and POIs around A station (see FIGS. 5 and 6). The "C station" search context label 416 is then selected by a user, thereby replacing the search context label group 40 with a search context label group 42 for searching for POI information on the region around C station and POI information on the region around C station.

If the selected search context label is associated with a place (such as "C station" or "B town"), the server 1 may more preferentially search for and extract search context labels for searching for POIs close to the place or POIs that are found in large numbers in the region around the place. At this time, the server 1 may extract search context labels on the basis of the scores based on user preferences and a user behavior pattern.

Alternatively, the server 1 may calculate the context feature amount scores of search context labels in a manner that the search context labels have higher scores as the search context labels are more highly correlated with the search purpose of "searching for POIs around C station" which is estimated on the basis of the selected search context label, and may extract search context labels preferentially from the search context label having the highest feature amount score.

### <4-2. UI example in which search context labels can be selected>

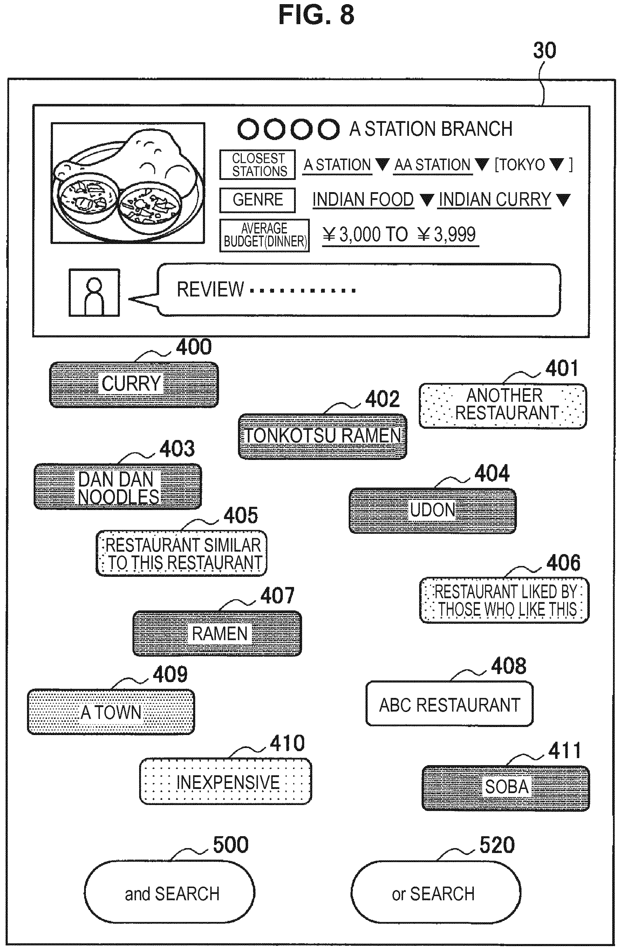

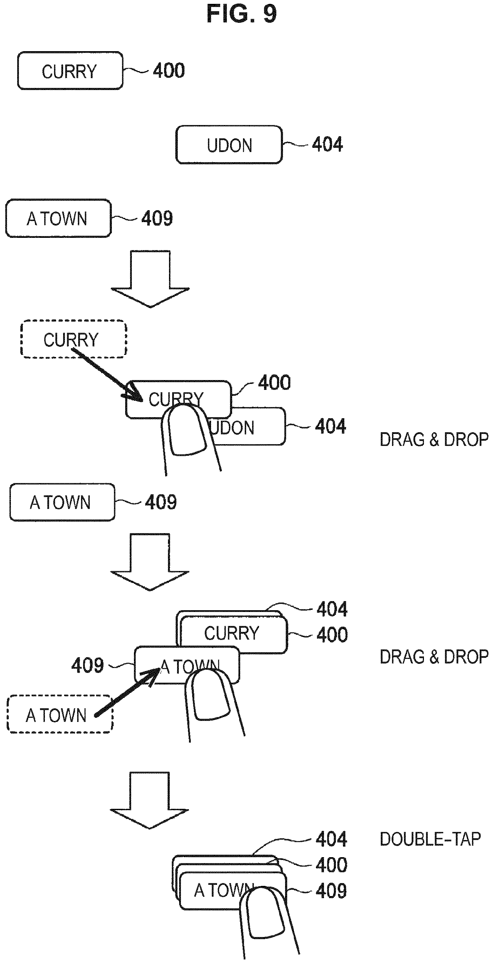

In the example discussed above with reference to FIG. 7, a single search context label is tapped and selected on the display screen, and, at the same time, the client 2 requests a re-search/re-extraction from the server 1, thereby making the transition to the display screen of re-search POI information/re-extraction stroll context label which is returned by the server 1. The present embodiment is not, however, limited thereto. For example, a plurality of search context labels may be selected, and a re-search/re-extraction may be then requested from the server 1. This will be described with reference to FIGS. 8 and 9.

FIG. 8 is a diagram illustrating a UI example in which a plurality of search context labels can be selected. As illustrated in FIG. 8, an "and search" button 500 and/or an "or search" button 520 are displayed along with a plurality of search context labels. After selecting a plurality of search context labels, a user selects the "and search" button 500 or the "or search" button 520. The selection of a search button serves as a trigger, and the client 2 transmits selection information indicating the plurality of selected context labels to the server 1. The client 2 hereby requests a POI information re-search/search context label re-extraction. Displaying the "and search" button 500 and/or the "or search" button 520 on the display screen in this way makes it possible to select a plurality of search context labels.

FIG. 9 is a diagram illustrating another UI example in which a plurality of search context labels can be selected. It is possible here to select a plurality of search context labels with no search button displayed, by overlapping the plurality of search context labels. Specifically, as illustrated in the top of FIG. 9, a user drags and drops a search context label 400 that the user would like to select on a search context label 404 that the user would also like to select, and further drags and drops a context label 409 that the user would like to select on the search context labels 404 and 409. The user then double-taps or holds down the three overlapped search context labels 400, 404, and 409 to issue an instruction of a search. Double-tapping or holding down the overlapped search context labels serves as a trigger, and the client 2 requests a POI information re-search/search context label re-extraction from the server 1.

In the example illustrated in FIG. 9, the "curry" search context label 400, the "udon" search context label 404, and the "A town" search context label 409 are selected. The server 1 thus searches for POI information on "curry udon" in "A town."

### <4-3. Display mode example of search context label>

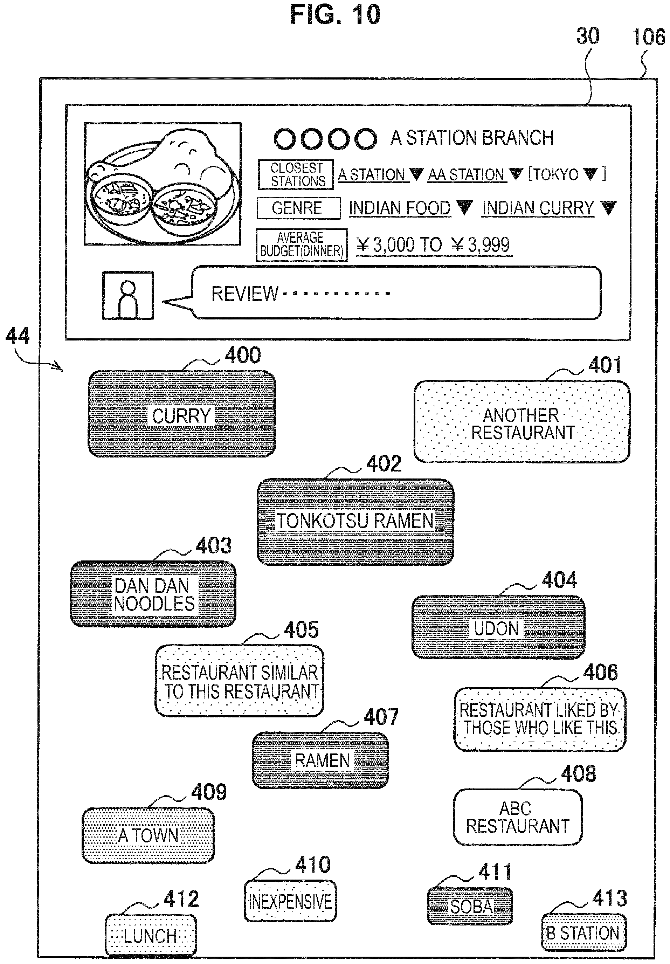

It is described in the embodiment discussed above with reference to FIGS. 5 and 6 that search context labels are displayed in different colors in accordance with the genres (categories) of the search context labels. The display modes of search context labels according to the present embodiment are not, however, limited thereto. This will be specifically described with reference to FIGS. 10 to 12.

FIG. 10 is a diagram illustrating a UI example in which the sizes of search context labels are different in accordance with priority of the search context labels. As illustrated in FIG. 10, search context labels displayed at higher positions are larger. As discussed above, search context labels to be presented to a user are displayed in the order in which search context labels are preferentially extracted in accordance with, for example, the closeness to the current location, the weighing according to user preferences, the matching with user behavior patterns, or the context feature amount score. Search context labels displayed at higher positions thus have higher priority, and are more likely to be selected by a user.

Accordingly, as illustrated in FIG. 10, search context labels displayed at higher positions are larger, thereby making it possible to make search context labels having high priority easier for a user to check and select. Additionally, the color of each search context label illustrated in FIG. 10 conforms to the genre of the search context label similarly to those of FIGS. 5 and 6.

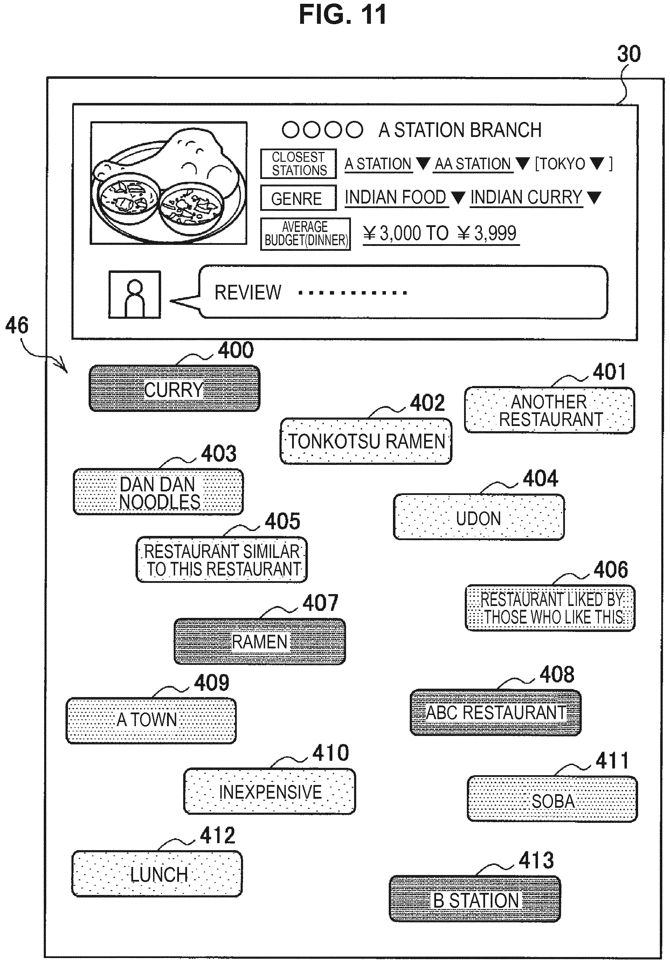

Next, it will be described with reference to FIG. 11 that the color of each search context label represents a recommendation level from some other perspectives. Search context labels are displayed in order of priority (closeness to the current location, user preferences, user behavior patterns, or context feature amount scores) in each of the examples discussed above. It is, however, possible to add display modes (such as color (including the darkness level of color) and size) according to a recommendation level for a user which is calculated from a perspective other than the priority used to display search context labels in order. For example, search context labels having higher recommendation levels may be displayed in darker colors. The recommendation levels calculated from another perspective may be, for example, calculated in cooperation with social information in a manner that search context labels for searching for restaurants that are talked about much among friends or restaurants that have been recently introduced on TV have higher scores.

A search context label group 46 is displayed in the descending order of priority, and the respective search context labels are displayed in different darkness levels according to the recommendation levels in the example illustrated in FIG. 11. For example, the search context labels 400, 407, 408, and 413 are displayed in the darkest color because the search context labels 400, 407, 408, and 413 have the highest recommendation level. The other search context labels having lower recommendation levels are accordingly displayed in lighter color.

This allows a user to intuitively distinguish search context labels having high recommendation levels.

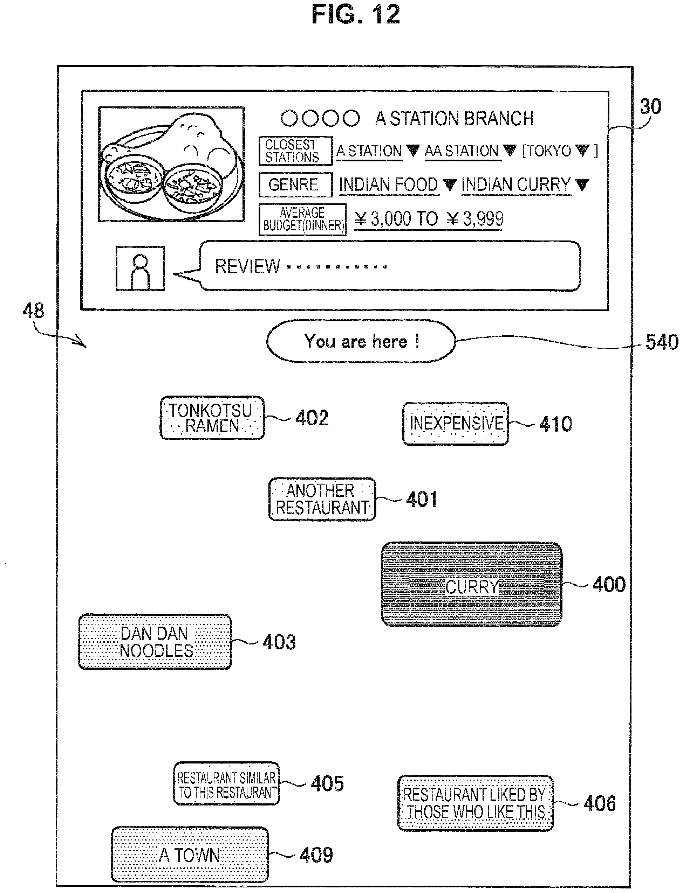

Next, it will be described with reference to FIG. 12 that search context labels are displayed at the display intervals according to the distance from the current location. In the example illustrated in FIG. 12, search context labels are displayed at the display intervals corresponding to the distance between POI information that is searched for and the current location of a user. That is, the display screen displays an icon 540 indicating the current location of a user, and the display interval from the icon 540 to each search context label correspond to the actual distance from the user current location to the position of POI information on the search context label which is searched for.

For example, if there is a tonkotsu ramen restaurant (example of POIs) close to the current location of a user, the search context label 402 for searching for tonkotsu ramen restaurants is displayed close to the icon 540 indicating the current location. Meanwhile, since the search context label 400 for searching for curry restaurants (example of POIs) is displayed at a position farther than the search context label 402, this shows that a curry restaurant for which the search context label 400 searches is located at a position farther than the tonkotsu ramen restaurant.

Displaying search context labels at the intervals according to the distance from the current location in this way allows a user to intuitively grasp the positions for which the displayed search context labels search.

In the example illustrated in FIG. 12, each search context label has the size and the color darkness level according to, as an example, the recommendation level described with reference to FIG. 11 from another perspective. For example, the search context label 400 for searching for the curry restaurant that has been recently talked much among friends on an SNS is displayed as the largest in the darkest color.

### <4-4. UI example in which past history is presented>

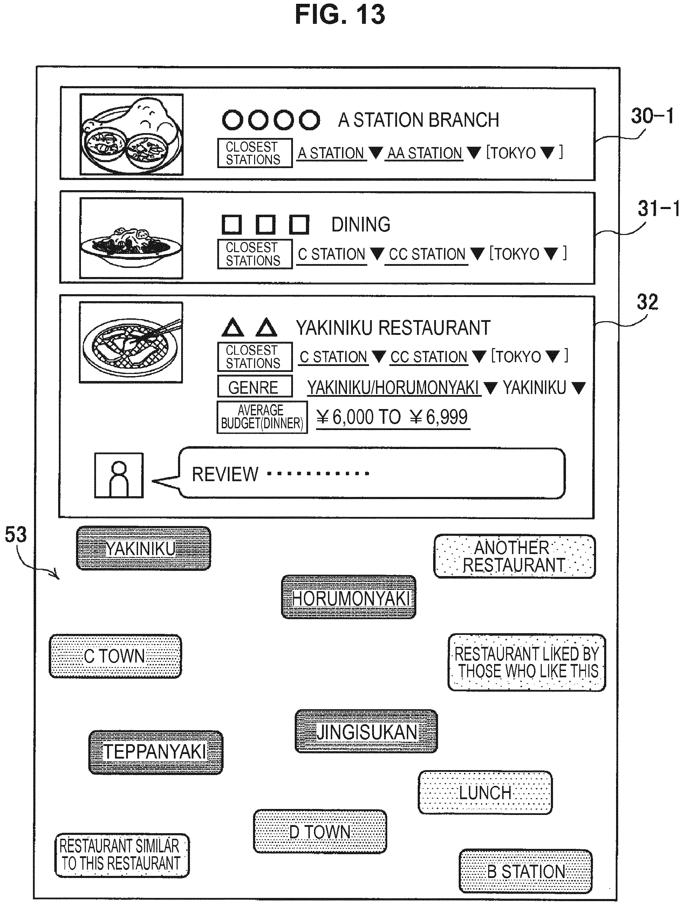

Next, a UI example in which a past history is additionally presented will be described with reference to FIGS. 13 to 14. While searching for information, a user sometimes changes his or her mind/interest in a short time. For example, it would frequently happen that at first, a user searches the field of "Italian" food for restaurant information, but is interested in and searches the field of "Chinese" food afterwards. The user would sometimes like to check the information again which the user has found in the search. The present embodiment then makes it possible to display a past search result (history) along with the current search result.

FIG. 13 is a diagram illustrating an example of a UI that additionally displays a POI information history. As illustrated in FIG. 13, POI information 30-1 and POI information 31-1 linked to past search results are displayed in addition to presented POI information 32 and a search context label group 53. Less information amount is used to present the POI information 30-1 and the POI information 31-1 than that of the POI information 32 presented in this search. For example, the names of the restaurants alone may be displayed. Once a user taps a POI information history that the user would like to view, the display screen transitions to the display screen of the past search result (the POI information and the search context label) linked to the POI information history. POI information histories are displayed in the order from the newest POI information history as illustrated in FIG. 13. For example, the POI information 31-1 presented in the last search is displayed, followed by the POI information 30-1 presented in the second last search. The user can view further past POI information histories by scrolling up the screen.

All past histories may be displayed, or the past histories to be displayed may be limited to information in which a user has been interested and on which the user carried out some action, such as POI information that the user has viewed in detail and POI information that the user has bookmarked.

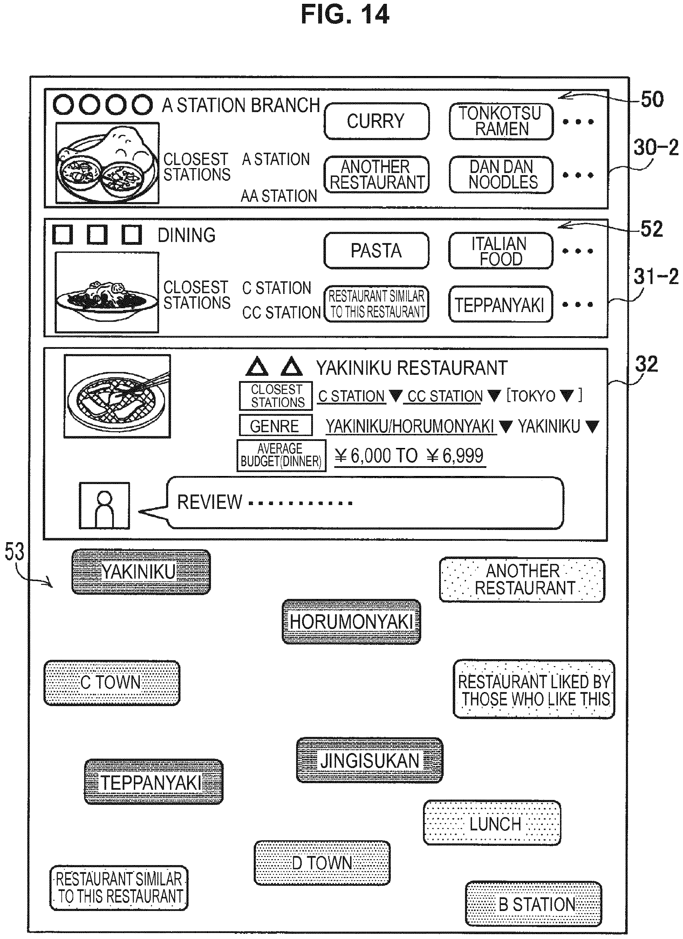

This allows the user to immediately return to the past search histories. Additionally, the past histories to be displayed are not limited to the history of POI information as illustrated in FIG. 13. The following describes another UI example with reference to FIG. 14.

FIG. 14 is a diagram illustrating another UI example of a past history. As illustrated in FIG. 14, POI information 30-2 and POI information 31-2 linked to past search results are displayed in addition to presented POI information 32 and a search context label group 53. In addition to the POI information searched for in the past, the POI information 30-2 and the POI information 31-2 include search context label groups 50 and 52 displayed along with the POI information searched for in the past. The search context label groups 50 and 52 may be represented, for example, by the top four search context labels.

This allows a user to immediately confirm the search context labels presented in the past along with the past POI information. If the user would like to select a search context label presented in the past, the user can select the search context label by tapping the target POI information history and making the screen transition to the past search result.

### <4-5. UI example according to different devices>

The above-described UI examples presuppose that there is a display area enough to display POI information and a search context label together. Specifically, if the client 2 is implemented, for example, as a smartphone, a tablet terminal, or a notebook PC, it can be said that the client 2 has an enough display area.

Meanwhile, some devices have such a narrow display area that it is difficult to display POI information and a search context label together. For example, a wearable device such as a band terminal and a watch terminal has a limited display area in some cases. A see-through glasses-type HND terminal also has a limited display area within the field of view of a user in order to secure the field of view in some cases.

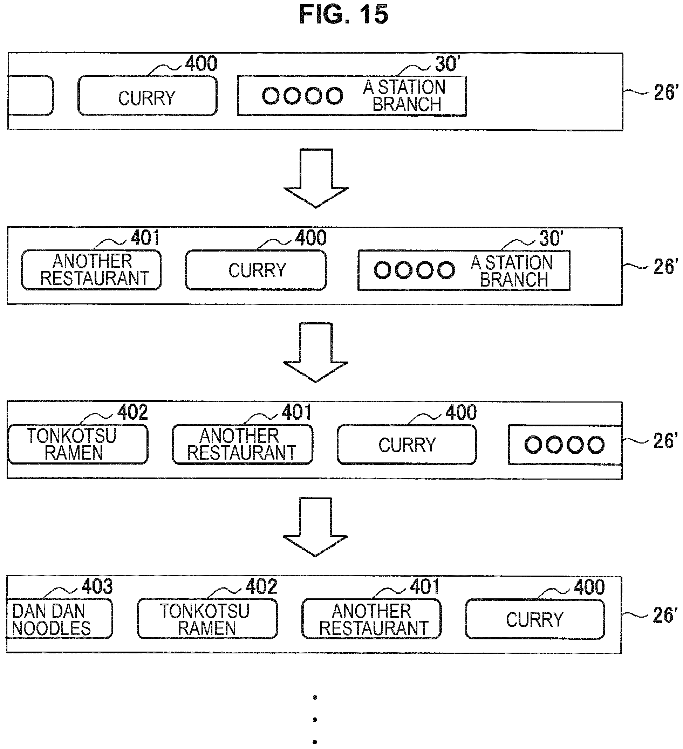

Description will be then made with reference to FIG. 15 for a UI example of a device having such a narrow display area that it is difficult to display POI information and search context as illustrated in FIG 5.

FIG 15 is a diagram illustrating a UI example of POI information and a search context label on a narrow display area. As illustrated in FIG. 15, display control is performed in a manner that POI information and search context labels sequentially fade in and out to flow on a horizontally long display area 26'. More specifically, as illustrated from the top of FIG. 15, POI information 30' first fades in from the left end of the screen, and the plurality of search context labels 400, 401, 402, and 403 then fade in sequentially. The plurality of search context labels 400 to 403 may be displayed in the order (order of priority) of preferential extraction of the search context label extraction unit 10a.

In this way, it is possible to display POI information and a search context label together even on a narrow display area, and a user can select the search context label matching each search purpose.

### <<5. Others>>

Next, the recommendation system according to the present embodiment will be supplemented. In the above-described embodiment, desired POI information is acquired by selecting a search context label desired by a user from the presented search context labels. The present embodiment is not, however limited thereto. For example, negative feedback may be yielded in a manner that undesired POI information is selected.

If the server 1 receives negative feedback from the client 2, the server 2 can present information as desired by a user by decreasing, for example, the score of a search context label to which the negative feedback pertains or the score of a related search context label in calculating the feature amount scores in the next search or extraction.

The UI example in which the past histories of recommendation results are presented has been described with reference to FIGS. 13 and 14, but it is also possible to present link information for the past recommendation results as search context labels. For example, the "previous restaurant" search context label 417 illustrated in FIG. 6 is link information for the display screen of the POI information presented last time. When the "previous restaurant" search context label 417 is selected, the server 1 extracts the POI information presented last time and the search context label presented at that time on the basis of the feedback histories stored in the user model DB 15, and replies to the client 2.

In this way, the present embodiment repeats the selection of a search context label and update processing of POI information and a search context label, so that it is of use to present link information for showing past recommendation results.

Some types of search context labels to be used can refer to different search context in spite of the same labels. For example, one of labels named after a place-name can refer to the region around the station having the place-name, another of the labels can refer to the area having the place-name, and still another of the labels can refer to the aquarium or zoo named after the place-name. In this case, even though the labels are the same, it is possible to simply present the labels to a user by unifying the colors of the labels according to the genres, or adding the text indicating the genres. For example, when labels named after the place-name R refer to the region around that station (R station), the labels are displayed as "place-name R (station)." When the labels refer to the area, the labels are displayed as "place-name (area)." When the labels refer to the aquarium (R aquarium), the labels are displayed as "place-name (aquarium)."

### <<6. Conclusion>>

As discussed above, the recommendation system according to an embodiment of the present disclosure also presents, to a user, search context labels indicating the policies of POI information searches along with specific POI information, and enables the user to select a search context label that matches the search purpose.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

It is also possible to make a computer program for causing hardware such as the CPU, the ROM, and the RAM built in the server 1 or the client 2 to implement the function of the server 1 or the client 2. There is also provided a computer-readable storage medium having the computer program stored therein.

POI information and a search context label are output onto the display screen, and an operation of feedback from a user is input onto the display screen in the embodiment discussed above. The recommendation system according to the present embodiment is not, however, limited thereto, but is also capable of voice inputs. This is of use, for example, when the client 2 is implemented as a see-through glasses-type HMD, a watch terminal or a band terminal, and it is difficult to make an input onto the display screen through a touch operation. The client 2 collects the voice of a user through a microphone (not illustrated), and transmits the collected sound data to the server 1. The server analyzes the received sound data, extracts a search context label similar to the recognized keyword, and presents the extracted search context label along with POI information.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) An information processing device including:
   a search unit configured to search for POI information to be recommended to a user;
   an extraction unit configured to extract one or more search axes for searching for the POI information to be recommended to the user, in accordance with current position information of the user; and
   a presentation control unit configured to perform control in a manner that the extracted search axis is presented to the user along with the POI information that has been searched for.
(2) The information processing device according to (1), wherein
   the extraction unit preferentially extracts a search axis for searching for POI information close to a current location of the user.
(3) The information processing device according to (1) or (2), wherein
   the search unit re-searches for POI information on the basis of a search axis selected by the user,
   the extraction unit preferentially re-extracts a search axis highly correlated with a search purpose estimated on the basis of the search axis selected by the user, and
   the presentation control unit performs control in a manner that a re-extracted search axis is presented along with POI information that has been re-searched for.
(4) The information processing device according to (3), wherein
   each time the user selects a search axis, the extraction unit calculates a feature amount score for each search axis, the feature amount score indicating a correlation with a selected search axis.
(5) The information processing device according to any one of (1) to (4), wherein
   the extraction unit preferentially extracts a search axis highly correlated with a user preference.
(6) The information processing device according to (5), wherein
   the user preference is calculated on the basis of a feedback history including at least any one of a search axis and POI information selected by the user.
(7) The information processing device according to any one of (1) to (6), wherein
   the extraction unit preferentially extracts a search axis highly correlated with a behavior pattern of the user.
(8) The information processing device according to any one of (1) to (7), wherein
   the search axis indicate at least any one of an area search, a field search, a recommendation algorithm search, a recommendation reason search, and a price search.
(9) The information processing device according to any one of (1) to (8), wherein the extraction unit extracts a plurality of search axes irrespective of granularity of a search.
(10) The information processing device according to any one of (1) to (9), wherein
   the presentation control unit performs control in a manner that a control signal for presenting the search axis and the POI information is transmitted to a client.
(11) A control method including:
   searching for POI information to be recommended to a user;
   extracting one or more search axes for searching for the POI information to be recommended to the user, in accordance with current position information of the user; and
   performing control in a manner that the extracted search axis is presented to the user along with the POI information that has been searched for.
(12) A program for causing a computer to function as:
   a search unit configured to search for POI information to be recommended to a user;
   an extraction unit configured to extract one or more search axes for searching for the POI information to be recommended to the user, in accordance with current position information of the user; and
   a presentation control unit configured to perform control in a manner that the extracted search axis is presented to the user along with the POI information that has been searched for.

### Reference Signs List

- 1: server
- 10: control unit
- 10a: search context label extraction unit
- 10b: POI information search unit
- 10c: presentation control unit
- 10d: learning unit
- 11: communication unit
- 13: POI information DB
- 14: search context label DB
- 15: user model DB
- 2: client
- 21: CPU
- 22: ROM
- 23: RAM
- 24: storage unit
- 25: communication I/F
- 26: operation display unit
- 27: position information acquisition unit
- 3: base station
- 4: network

## Claims

1. An information processing device comprising:
a search unit configured to search for POI information to be recommended to a user;
an extraction unit configured to extract one or more search axes for searching for the POI information to be recommended to the user, in accordance with current position information of the user; and
a presentation control unit configured to perform control in a manner that the extracted search axis is presented to the user along with the POI information that has been searched for.

2. The information processing device according to claim 1, wherein
the extraction unit preferentially extracts a search axis for searching for POI information close to a current location of the user.

3. The information processing device according to claim 1, wherein
the search unit re-searches for POI information on the basis of a search axis selected by the user,
the extraction unit preferentially re-extracts a search axis highly correlated with a search purpose estimated on the basis of the search axis selected by the user, and
the presentation control unit performs control in a manner that a re-extracted search axis is presented along with POI information that has been re-searched for.

4. The information processing device according to claim 3, wherein
each time the user selects a search axis, the extraction unit calculates a feature amount score for each search axis, the feature amount score indicating a correlation with a selected search axis.

5. The information processing device according to claim 1, wherein
the extraction unit preferentially extracts a search axis highly correlated with a user preference.

6. The information processing device according to claim 5, wherein
the user preference is calculated on the basis of a feedback history including at least any one of a search axis and POI information selected by the user.

7. The information processing device according to claim 1, wherein
the extraction unit preferentially extracts a search axis highly correlated with a behavior pattern of the user.

8. The information processing device according to claim 1, wherein
the search axis indicate at least any one of an area search, a field search, a recommendation algorithm search, a recommendation reason search, and a price search.

9. The information processing device according to claim 1, wherein
the extraction unit extracts a plurality of search axes irrespective of granularity of a search.

10. The information processing device according to claim 1, wherein
the presentation control unit performs control in a manner that a control signal for presenting the search axis and the POI information is transmitted to a client.

11. A control method comprising:
searching for POI information to be recommended to a user;
extracting one or more search axes for searching for the POI information to be recommended to the user, in accordance with current position information of the user; and
performing control in a manner that the extracted search axis is presented to the user along with the POI information that has been searched for.

12. A program for causing a computer to function as:
a search unit configured to search for POI information to be recommended to a user;
an extraction unit configured to extract one or more search axes for searching for the POI information to be recommended to the user, in accordance with current position information of the user; and
a presentation control unit configured to perform control in a manner that the extracted search axis is presented to the user along with the POI information that has been searched for.
